# EUROPÄISCHE PATENTSCHRIFT

(11) **EP 2 585 673 B1**
(45) Veröffentlichungstag und Bekanntmachung des Hinweises auf die Patenterteilung: **19.07.2017**
(21) Anmeldenummer: 11743760.8
(22) Anmeldetag: 22.06.2011
(51) Int. Cl.: E21B 33/127, E21B 33/136, F16L 55/128, F16L 55/134

(54) **VORRICHTUNG FÜR DAS STIRNSEITIGE ABDICHTEN EINES ROHRES AUS WELCHEM FLUID STRÖMT**
DEVICE FOR SEALING THE END FACE OF A TUBE FROM WHICH FLUID FLOWS
DISPOSITIF POUR L'ÉTANCHEMENT FRONTAL D'UN TUYAU PAR LEQUEL S'ÉCOULE UN FLUIDE

(30) Priorität: 25.06.2010 AT 10772010
(43) Veröffentlichungstag der Anmeldung: 01.05.2013
(73) Patentinhaber: Degelsegger, Walter, 4693 Desselbrunn (AT)
(72) Erfinder: Degelsegger, Walter, 4693 Desselbrunn (AT)
(86) Internationale Anmeldenummer: PCT/AT2011/000274
(87) Internationale Veröffentlichungsnummer: WO 2011/160150

(56) Entgegenhaltungen:
- EP-A1- 0 955 103
- US-A1- 2006 064 829
- US-A1- 2007 214 590
- US-B1- 6 769 321

## Beschreibung

Die US 6944902 B1 beschreibt ein Inspektionsfahrzeug, welches durch Gaspipelines durch den Gasfluss selbst angetrieben bewegt werden soll und dazu im Gasfluss mitgerissen wird. Von einem etwa kreiszylindrischen Hohlkörper aus stehen radial Dichtkörper an die Innenwand der Pipeline ab. Mittels verschließbarer Öffnungen im kreiszylindrischen Hohlkörper kann wahlweise ein Bypass für den Gasfluss an den Dichtkörper vorbei geschaffen werden.

Die US 6769321 B1 beschreibt ein Inspektionsfahrzeug, welches durch eine Pipeline wie z.B. eine Ölpipeline bewegt wird, wobei die Antriebsenergie aus der Bewegung des Fluids in der Pipeline gewonnen wird und wobei die Bewegungsrichtung des Inspektionsfahrzeuges entgegengesetzt zur Fließrichtung des Fluids ausgerichtet sein kann. Das Inspektionsfahrzeug weist eine Turbine auf, welche durch das strömende Fluids zu Drehbewegung angetrieben wird und welche über einen ausgefeilten Übersetzungsmechanismus borstenartige Stützkörper die an der Innenrand der Pipeline schräg anliegen, in Axialrichtung der Pipeline relativ zum restlichen Inspektionsfahrzeug abwechselnd vor und zurück bewegt. Indem die borstenartigen Stützkörper auf Grund ihrer Ausrichtung gegen Bewegung relativ zur Pipeline in die eine Richtung verklemmen und in die andere Richtung gleiten können und indem ein zweites Set von borstenartigen Stützkörpern verwendet wird, welches gegenüber dem Getriebe nicht bewegt wird aber gleich ausgerichtet wie das erste Set an der Innenwand der Pipeline anliegt, bewegt sich das ganze Inspektionsfahrzeug.

Der Erfinder hat sich die Aufgabe gestellt, das Verschließen eines Rohres zu ermöglichen, welches aus dem Bohrloch einer Ölquelle ragt und aus welchem Rohöl unter hohem Druck und unter erheblichem Fluss pro Zeit ausströmt.

Zum Lösen der Aufgabe wird eine Vorrichtung entsprechend der Kombination folgender Merkmale vorgeschlagen:
- In das abzudichtende Rohr wird von der Stirnseite her ein dünneres, "inneres" Rohr eingesteckt, durch welches hindurch Fluid abtransportiert werden kann. Der Außendurchmesser des inneren Rohres ist kleiner als der Innendurchmesser des äußeren, abzudichtenden Rohres.
- An der Stirnseite des inneren Rohres ist eine Turbine angebracht, welche durch das strömende Fluid angetrieben wird und deren Bewegung die Bewegung eines oder mehrerer Dichtkörper antreibt.
- Durch die besagte Bewegung der Dichtkörper werden diese von einer Stellung in der sie wenig oder nicht dichten in eine solche Stellung übergeführt, in der sie den Ringspalt zwischen den beiden Rohren abdichten oder zumindest Fluss im Ringspalt so stark behindern, dass es problemlos möglich wird, hinter diesen Dichtkörpern eine dauerhafte, vollständig dichtende Dichtung anzubringen.

Die Erfindung wird an Hand eines Ausführungsbeispiels veranschaulicht.
- Fig. 1:: zeigt in einer vertikalen Teilschnittansicht eine erste beispielhafte erfindungsgemäße Vorrichtung.
- Fig. 2:: zeigt in einer vertikalen Teilschnittansicht eine zweite beispielhafte erfindungsgemäße Vorrichtung.

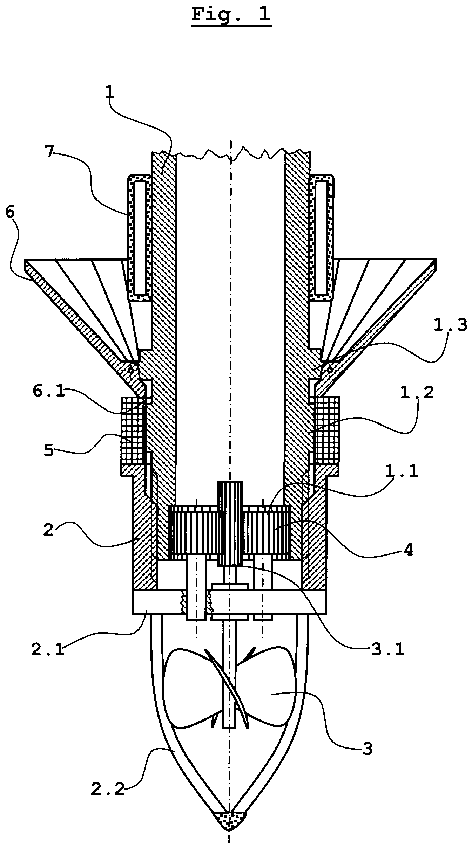

In der Ausrichtung gemäß Fig. 1 wäre das nicht dargestellte, abzudichtende Rohr vertikal nach oben ausgerichtet und die erfindungsgemäße Vorrichtung vertikal nach unten dieses hineinzuszecken, wobei Fluid aus dem abzudichtenden Rohr heraus, also von unten nach oben strömen würde.

Die erfindungsgemäße Vorrichtung gemäß Fig. 1 weist ein Rohr 1, des weiteren "inneres Rohr" genannt auf.

An seinem in das abzudichtende Rohr einzuführenden Ende ist das innere Rohr 1 mit einem Schraubengewinde versehen, an welchem ein ringförmiger Mutternteil 2 aufgesetzt und damit in Gewindeeingriff ist.

An seiner über die Stirnseite des inneren Rohres 1 hinausragenden Stirnseite ist der Mutternteil 2 durch eine Strebe 2.1 überspannt. Von der Stirnseite des Mutternteils 2 aus ragt ein im Wesentlichen durch drei oder vier Längsstreben 2.2 gebildeter, etwa kegelförmiger Schutzkäfig in jene Richtung, in welche das innere Rohr 1 in das äußere Rohr eingeführt werden muss.

Im Schutz des Käfigs ist eine Turbine 3 angeordnet, deren Rotorachse mit der Achse des inneren Rohres 1 fluchtet und deren Rotor am Strebenteil 2.1 drehbar gelagert ist.

Koaxial mit dem Rotor der Turbine verbunden ist ein Zahnrad 3.1 angeordnet, welches das Sonnenrad eines Planetengetriebes bildet. Zwei damit in Eingriff befindliche Planetenräder 4 sind an der mit dem Mutternteil 2 starr verbundenen Strebe 2.1 gelagert. Das feststehende Innenzahnrad des Planetengetriebes, mit welchem die Planetenräder 4 ebenfalls in Eingriff sind, wird durch eine Innenverzahnung 1.1 an der inneren Mantelfläche des inneren Rohres 1 in dessen an die Stirnseite angrenzenden Längsbereich gebildet.

Das ausströmende Fluid treibt den Rotor der Turbine 3 an. Durch die Übersetzung des Planetengetriebes wird die Drehung des Rotors in eine sehr viel langsamere Drehung des Mutternteils 2 übersetzt, wodurch dieser wegen seines Gewindeeingriffes weiter auf das Rohr 1 aufgeschoben wird, sodass er einen am Rohr nur axial verschiebbar geführten Distanzring 5 verschiebt, sodass dieser gegen schaufelartige Dichtkörper 6 drückt, welche schwenkbar am inneren Rohr 1 befestigt sind und durch diesen Druck vom inneren Rohr 1 radial weg gespreizt werden.

Bestimmungsgemäß kommen die Dichtkörper 6 mit ihren radial äußeren Enden mit der Innenmantelfläche des (nicht dargestellten) abzudichtenden Rohres in Kontakt und verhindern oder behindern so Fluss im Ringspalt zwischen den beiden Rohren. Nun können ein oder mehrere aufpumpbare Dichtkörper 7, welche ringförmig um die Mantelfläche des inneren Rohres angeordnet sind, aufgepumpt werden und die Dichtwirkung verbessern. Zwischen axial voneinander beabstandeten derartigen Dichtkörper 7 kann nun auch enthaltenes Fluid abgesaugt und eine aushärtende, dauerhaft fest werdende Dichtmasse eingepumpt werden und aushärten gelassen werden.

Das innere Rohr kann in einem hinteren Längsbereich mit einer Absperrarmatur versehen sein womit der Fluss des Fluids nach fertiger Abdichtung im Ringspalt zwischen den beiden Rohren zur Gänze abgestellt werden kann.

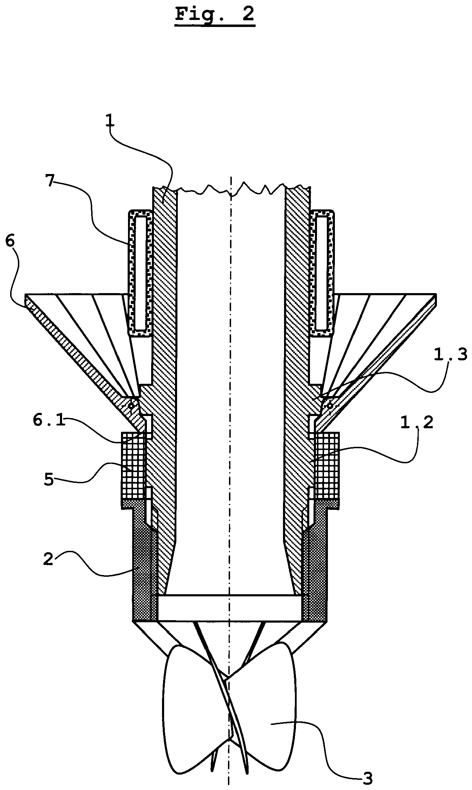

Fig. 2 zeigt eine Ausführungsform, bei welcher der Rotor der Turbine 3 starr mit dem Mutternkörper 2 verbunden ist, sodass seine Drehzahl gleich der Drehzahl des Mutternkörpers ist. Gegenüber der Ausführungsform von Fig. 1 verliert man dabei zwar die Untersetzung der Drehzahl und den damit verbunden Drehmomentgewinn für das Bewegen des Mutternkörpers, kann damit aber andererseits gefährliche Querschnittsverengungen am Eintritt in das innere Rohr 1 vermeiden.

Indem der Querschnitt der erfindungsgemäßen Vorrichtung beim Einbringen in das abzudichtende Rohr kleiner ist als für den nachfolgenden Abdichtvorgang und indem die Energie für den ersten Abdichtvorgang aus der Strömung des Fluids selbst genommen wird, funktioniert die erfindungsgemäße Vorrichtung gut handhabbar und robust.

Die dargestellten Übersetzungen zwischen der Drehbewegung des Rotors der Turbine 3 und dem Schwenken der Dichtkörper 6 sind als vorteilhafte aber dennoch nur beispielhafte Ausführungsformen der Erfindung zu verstehen.

Der grundlegende und allgemeine Erfindungsgedanke ist, dass durch das ausströmende Fluid eine Turbine angetrieben wird und dass die von dieser Turbine in Form von Drehbewegung abgebbare mechanische Energie dazu verwendet wird, einen Dichtkörper von einer weniger dichtenden Stellung in eine mehr dichtende Stellung zu bewegen, wozu die mechanische Energie von der Turbine über eine mechanische Übersetzung an den Dichtkörper gebracht wird.

Innerhalb dieses grundlegenden und allgemeinen Erfindungsgedankens sind sicherlich auch noch weitere Ausführungsformen denkbar und sinnvoll:
Beispielsweise kann an Stelle von vielen schaufelartigen Dichtkörpern 6 auch ein ringförmiger Dichtkörper verwendet werden, dessen radiale Querschnittsabmessung durch Druck durch den Distanzring 5 oder auch direkt durch den Mutternteil 2 vergrößert wird, sodass Dichtwirkung im Ringspalt erzeugt wird.

Ebenso könnten beispielsweise schwenkbare oder radial verschiebbare Dichtungslamellen durch die Zahnflanken eines mit einer Außenverzahnung versehenen Ringes geschwenkt werden bzw. radial nach außen verschoben werden, wobei der Ring durch die Drehung der Turbine unmittelbar oder über ein Getriebe zu Drehung angetrieben wird.

Da es eine unendliche Vielfalt von mechanischen Übersetzungen gibt, durch welche die Bewegung einer Turbine in die Bewegung eines Dichtkörpers übersetzt werden kann, und da es für den Fachmann auf dem Gebiet mechanischer Übersetzungen durchaus möglich ist, aus der Aufgabenstellung, dass ein vorgegebener antreibender Teil (Turbine) einen oder mehrere vorgegebene anzutreibende Teile (Dichtkörper) bewegen muss, eine oder mehrere weitere passende mechanische Übersetzungen zu schaffen, ist es hier über die genannten Beispiele hinaus nicht erforderlich noch weitere Ausführungsformen zu erklären.

Die in dieser Beschreibung bekanntgegeben Lösungen für derartige mechanische Übersetzungen sind also nur als anschauliche Beispiele zu verstehen durch die vor allem die - an sich im Rahmen fachmännischer Tätigkeit lösbare - Aufgabenstellung an die Gestaltung einer mechanischen Übersetzung veranschaulicht werden soll.

Aus praktischen Gründen wird die durch die Turbine anzutreibende Bewegung eines oder mehrerer Dichtkörper bevorzugt eine solche Bewegung sein, durch welche die Dichtkörper vom inneren Rohr radial weg gespreizt werden, da es bei anderen Ausführungsformen schwierig bis unmöglich ist, das innere Rohr gemeinsam mit den an ihm angeordneten Dichtkörper in das das abzudichtende Rohr einzubringen.

## Patentansprüche

1. Vorrichtung für das stirnseitige Abdichten eines Rohres aus welchem Fluid strömt, wobei die Vorrichtung ein inneres Rohr (l) umfasst, welches kleineren Durchmesser aufweist als das abzudichtende Rohr und stirnseitig entgegen der Strömungsrichtung des Fluids in das abzudichtende Rohr eingeführt wird und weiters einen Dichtkörper (6), welcher dazu vorgesehen ist, den Ringspalt zwischen innerem Rohr (1) und abzudichtendem Rohr abzudichten,
**dadurch gekennzeichnet, dass**
im Bereich der Stirnseite des inneren Rohres (1) eine Turbine (3) angebracht ist, welche durch das strömende Fluid antreibbar ist, dass der Dichtkörper (6) am inneren Rohr (1) bewegbar angeordnet ist und dass die Vorrichtung eine mechanische Übersetzung umfasst, welche Drehbewegung des Rotors der Turbine (3) zufolge strömendem Fluid in eine Bewegung des Dichtkörpers (6) übersetzt, durch welche dieser von einer weniger dichtenden Stellung in eine mehr dichtende Stellung übergeführt wird.

2. Vorrichtung nach Anspruch 1, **dadurch gekennzeichnet, dass** die Bewegung des Dichtkörpers (6) eine solche ist, durch welche dieser radial vom inneren Rohr (1) weg gespreizt wird.

3. Vorrichtung nach Anspruch 1 oder Anspruch 2, **dadurch gekennzeichnet, dass** die mechanische Übersetzung vom Rotor der Turbine (3) auf den Dichtkörper (6), die angetriebene Drehbewegung einer Gewindemutter (2) und die dadurch angetriebene axiale Bewegung eines Teils des Dichtkörpers (6) umfasst.

4. Vorrichtung nach einem der Ansprüche 1 bis 3, **dadurch gekennzeichnet**, das die die mechanische Übersetzung vom Rotor der Turbine (3) auf den Dichtkörper (6) ein Planetengetriebe umfasst, wobei das Sonnenrad (3.1) durch den Rotor der Turbine (3) angetrieben ist.

5. Vorrichtung nach Anspruch 3 und Anspruch 4, **dadurch gekennzeichnet, dass** die Drehbewegung der Gewindemutter (2) durch das Planentengetriebe angetrieben ist.

6. Vorrichtung nach Anspruch 3, **dadurch gekennzeichnet**, das die Gewindemutter (2) starr mit dem Rotor der Turbine (3) verbunden ist. (Fig. 2)

7. Vorrichtung nach Anspruch 5 oder Anspruch 6, **dadurch gekennzeichnet, dass** der Dichtkörper (6) schaufelartig ausgebildet ist und dass eine Mehrzahl von gleichartigen Dichtkörpern (6) jeweils um eine am inneren Rohr (1) fixierte Lagerung in jeweils einer radialen Ebene schwenkbar sind.

8. Vorrichtung nach Anspruch 5 oder Anspruch 6, **dadurch gekennzeichnet, dass** der Dichtkörper ringförmig um die Mantelfläche des inneren Rohres (1) herum verläuft und seine radiale Querschnittsabmessung durch axialen Druck vergrößerbar ist und dass axialer Druck auf den Dichtkörper durch axiale Bewegung der Gewindemutter (2) hervorrufbar ist.

## Claims

1. A device for the front side sealing of a pipe from which fluid leaks, whereby the device comprises an inner pipe (1), which has a smaller diameter than the tube to be sealed and is inserted at the front end into the pipe to be sealed against the flow direction of the fluid, as well as a sealing element (6) which is intended to seal the annular gap between the inner pipe (1) and the pipe to be sealed,
which is **characterised by** the fact that
a turbine (3), which can be propelled by the flowing fluid, is mounted in the region of the front end of the inner pipe (1), that the sealing body (6) is arranged to be moveable on the inner pipe (1), and that the device comprises a mechanical transmission, which translates the rotary movement of the rotor of the turbine (3) according to flowing fluid into a mouvement of the sealing body (6), through which the latter is transferred from a less sealing position into a more sealing position.

2. The device according to Claim 1 is **characterised in that** the movement of the sealing body (6) is such that the latter is spread radially away from the inner pipe (1).

3. A device according to Claim 1 or Claim 2 is **characterised in that** it includes the mechanical transmission of the rotor of the turbine (3) onto the sealing body (6), the propelled rotary movement of a threaded nut (2) and the resulting axial movement of a part of the sealing body (6).

4. A device according to one of the Claims 1 to 3 is **characterised in that** the mechanical transmission from the rotor of the turbine (3) onto the sealing body (6) comprises a planetary gear, whereby the sun wheel (3.1) is being propelled by the rotor of the turbine (3).

5. A device according to Claim 3 and Claim 4 is **characterised in that** the rotary movement of the threaded nut (2) is propelled by the planetary gear.

6. A device according to Claim 3 is **characterised in that** the threaded nut (2) is rigidly connected to the rotor of the turbine (3). (Fig. 2)

7. A device according to Claim 5 or Claim 6 is **characterised in that** the sealing body (6) is designed in the form of a shov-el, and that a multitude of identical sealing bodies (6) can each be swivel-mounted around a bearing that is fixed to the inner pipe (1) in a respective radial plane.

8. A device according to Claim 5 or Claim 6 is **characterised in that** the sealing body extends annularly arcund the shell surface of the inner pipe (1), and its radial cross-sectional dimension can be increased by axial pressure, and that axial pressure on the sealing body can be caused by axial movement of the threaded nut (2).

## Revendications

1. Dispositif servant à étanchéiser le côté frontal d'un tube duquel s'écoule un fluide, sachant que le dispositif comprend un tube intérieur (1) présentant un plus petit diamètre que le tube à étanchéiser et que l'on va introduire frontalement, dans le tube à étanchéiser, en sens inverse de celui d'écoulement du fluide, et en outre un corps d'étanchéité (6) prévu pour étanchéiser l'interstice annulaire entre le tube intérieur (1) et le tube à étanchéiser,
**caractérisé en ce que**
dans la zone de la face frontale du tube intérieur (1) a été fixée une turbine (3) pouvant être entraînée par le fluide en écoulement, **en ce que** le corps d'étanchéité (6) est disposé mobile contre le tube intérieur (1) et **en ce que** le dispositif comprend une transmission mécanique qui transforme le mouvement rotatif du rotor de la turbine (3) suivant le fluide en écoulement en un mouvement du corps d'étanchéité (6), mouvement qui transfère ce corps d'une position qui étanchéise moins vers une position qui étanchéise plus.

2. Dispositif selon la revendication 1, **caractérisé en ce que** le mouvement du corps d'étanchéité (6) consiste en une expansion radiale de ce corps au départ du tube intérieur (1).

3. Dispositif selon la revendication 1 ou la revendication 2, **caractérisé en ce que** la transmission mécanique du rotor de la turbine (3) sur le corps d'étanchéité (6) comprend le mouvement rotatif entraîné d'un écrou fileté (2) et le mouvement axial ainsi entraîné d'une partie du corps d'étanchéité (6).

4. Dispositif selon l'une des revendications 1 à 3, **caractérisé en ce que** la transmission mécanique du rotor de la turbine (3) vers le corps d'étanchéité (6) comprend un engrenage planétaire, sachant que le pignon solaire (3.1) est entraîné par le rotor de la turbine (3).

5. Dispositif selon la revendication 3 et la revendication 4, **caractérisé en ce que** le mouvement rotatif de l'écrou fileté (2) est entraîné par l'engrenage planétaire.

6. Dispositif selon la revendication 3, **caractérisé en ce que** l'écrou fileté (2) est relié de façon rigide avec le rotor de la turbine (3). (Fig. 2)

7. Dispositif selon la revendication 5 ou la revendication 6, **caractérisé en ce que** le corps d'étanchéité (6) est configuré en forme de pelle et que plusieurs corps d'étanchéité (6) du même type peuvent, chacun sur un plan radial, pivoter sur un palier fixé contre le tube intérieur (1).

8. Dispositif selon la revendication 5 ou la revendication 6, **caractérisé en ce que** le corps d'étanchéité présente un tracé annulaire autour de la surface enveloppante du tube intérieur (1), et que la dimension radiale de sa section peut être agrandie sous l'exercice d'une pression axiale, et que la pression axiale sur le corps d'étanchéité peut être provoquée par le mouvement axial de l'écrou fileté (2).
